Europäisches Patentamt

European Patent Office (11) Publication number: **0 088 019**

Office européen des brevets **B1**

(12) **EUROPEAN PATENT SPECIFICATION**

(45) Date of publication of patent specification: **11.12.85**   (51) Int. Cl.⁴: **B 60 T 11/20**

(21) Application number: **83400394.9**

(22) Date of filing: **25.02.83**

(54) **Master cylinder.**

<table>
<tr><td>

(30) Priority: **01.03.82 US 353319**
**01.03.82 US 353320**

(43) Date of publication of application:
**07.09.83 Bulletin 83/36**

(45) Publication of the grant of the patent:
**11.12.85 Bulletin 85/50**

(84) Designated Contracting States:
**DE FR GB IT**

(56) References cited:
**EP-A-0 045 232**
**EP-A-0 045 233**
**EP-A-0 070 217**
**US-A-4 249 381**

</td><td>

(73) Proprietor: **THE BENDIX CORPORATION**
**Executive Offices Bendix Center**
**Southfield Michigan 48037 (US)**

(72) Inventor: **Gaiser, Robert Frank**
**5843 Ponderosa Drive**
**Stevensville Michigan 49127 (US)**
Inventor: **Bach, Lloyd Gene**
**61500 Greentree Drive**
**South Bend Indiana 46614 (US)**

(74) Representative: **Huchet, André et al**
**Service Brevets Bendix 44, rue François 1er**
**F-75008 Paris (FR)**

</td></tr>
</table>

Courier Press, Leamington Spa, England.

## Description

This invention relates to a master cylinder of the kind wherein a pair of pistons cooperate with a housing to form a pair of pressure chambers and the pair of pistons are movable during braking to generate fluid pressure within the pair of pressure chambers. Each of the pressure chambers communicates with a separate brake circuit to communicate fluid pressure thereto, and communicates further with a fluid reservoir through a compensation port, this latter fluid communication being controlled by appropriate means so as to be opened for replenishment purposes only when the pair of pistons are in a non-braking position.

Such a master cylinder is illustrated, for instance, in US—A—4 249 381 which discloses a displacement type master cylinder in which a pair of seals are fixedly disposed within a housing bore and a pair of pistons are sealingly engageable with the pair of seals, respectively. The housing defines a pair of reservoir cavities which communicate fluid to the pair of pressure chambers via compensation ports. In order to control fluid communication from the reservoir cavities to the pressure chambers, each piston is provided with notches opening communication between the cavities and the pressure chambers when the pistons are in a rest position. Consequently, each piston must be fabricated with notches so that both pistons are subjected to a machining operation.

It is an object of the present invention to improve the construction of such masters cylinders with a view to reducing its manufacturing cost.

This object is achieved, according to the invention, and in a master cylinder of the kind comprising a housing with a bore terminating in an open end, a pair of pistons telescopically mounted within one another and coaxially and slidably disposed within said bore, said pistons cooperating with each other and with the housing to define a pair of pressure chambers and being movable during braking to generate fluid pressure within said pressure chambers, a pair of outlet ports formed in the housing for communicating said pressure chambers with respective brake circuits, a pair of inlet or compensation ports formed in the housing for communicating said pressure chambers with a fluid reservoir, and passage means movable with said pistons and cooperating with fixed seals for allowing fluid communication between said compensation ports and said pressure chambers in the absence of braking and for closing said fluid communication during braking, thanks to the fact that said passage means are formed on the outer one of said pistons.

In a preferred embodiment of the invention, wherein one of the pistons is sealingly received within the housing bore and defines with an end wall of the latter one of the pressure chambers while the other piston is sealingly received and telescopically mounted within said one piston and defines therewith the other pressure chamber, and wherein resilient means are provided for biasing said pistons toward a rest position in engagement with respective stop means, the above defined passage means advantageously comprise two axially spaced sets of notches formed in said one piston, namely one set of notches adjacent the forward end of said one piston which define a fluid path between one of the compensation ports and said one pressure chamber, and another set of notches located at an intermediate portion of said one piston which define a fluid path between the other compensation port and said other pressure chamber.

In another preferred embodiment, the piston carrying the above defined sets of notches is sealingly received within a removable sleeve member which itself is introduced into the housing bore, rather than the piston being directly received within the latter; this alternative mode of construction, while is intended to facilitate the maintenance of the master cylinder, can be easily implemented without departing from the principles of the present invention.

One advantage resulting from the invention is, of course, that the structure for the piston without notches is simplified and the piston with notches can be fabricated in a single operation to provide both compensation paths for each pressure chamber.

A further advantage resulting from the invention is that the pair of pistons can be made fully telescoping to provide a shorter length for the master cylinder.

The invention will hereunder be illustrated with reference to the drawings of some preferred embodiments, given by way of examples only, in which:

— Figure 1 shows a first preferred embodiment of the master cylinder of the present invention in a brake system;

— Figure 2 shows an alternative embodiment for the master cylinder of Figure 1;

— Figure 3 shows another preferred embodiment of the master cylinder of the invention in a brake system; and

— Figure 4 shows an alternative embodiment for the master cylinder of Figure 3.

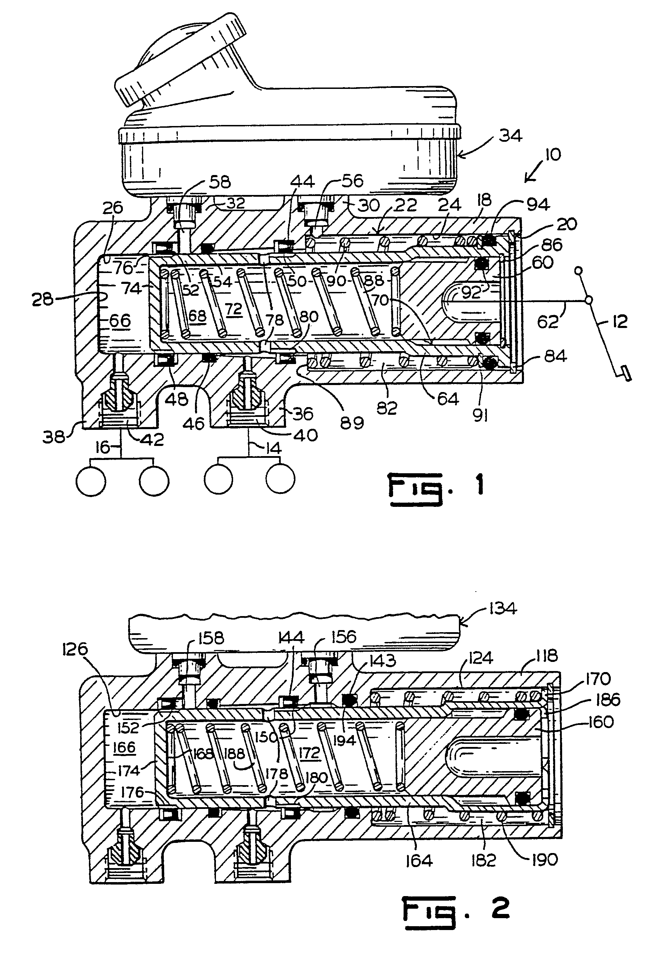

Referring first to Fig. 1 of the drawings, a master cylinder 10 is disposed within a brake system including a pedal 12 and a pair of brake circuits 14 and 16. The brake circuits may be axle to axle, as shown, or cross-split depending on the vehicle receiving the master cylinder 10. The operation of the master cylinder 10 is such that pivotal movement of the pedal 12 in a clockwise direction during braking results in fluid pressure being generated in the master cylinder 10 and also in the brake circuits 14 and 16.

The master cylinder 10 includes a housing 18 with an open end 20 leading to a bore 22. The bore 22 is stepped with a large diameter portion 24 adjacent the open end 20 and a small diameter portion 26 extending from an end wall 28. A first pair of bosses 30 and 32 extend upwardly from the housing 18 to support a reservoir 34 and a second pair of bosses 36 and 38 define outlet ports 40 and 42, respectively, communicating with the brake circuits 14 and 16.

The bore portion 26 is provided with a plurality of recesses 44, 46 and 48. Recesses 44 and 48 receive U cup seals 50 and 52 while the recess 46 receives an O ring seal 54. A first compensation port 56 communicates the reservoir 34 with the bore portion 24 to the right of U cup seal 50 and a second compensation port 58 communicates the reservoir 34 with the bore portion 26 between O ring seal 54 and U cup seal 52.

A primary piston 60 cooperates with an input member illustrated schematically at 62 to move within the bore portion 24 in response to movement of the pedal 12. A secondary piston 64 is movably disposed within the bore portions 24 and 26. The secondary piston 64 sealingly engages the U cup seal 52 and cooperates with the end wall 28 to substantially define a secondary pressure chamber 66. The secondary piston also sealingly engages the U cup seal 50. The secondary piston 64 is substantially U shaped in cross section to form a cavity 68 and the primary piston 60 is disposed within the cavity to sealingly engage a wall 70 of said cavity to substantially define a primary pressure chamber 72. In order to communicate the compensation port 58 with the pressure chamber 66, the forward end 74 of the secondary piston 64 is provided with one or more notches 76 which partially overlap or fluidly communicate with the compensation port 58 when the secondary piston is disposed in its rest position. The secondary piston 64 is also provided with more apertures 78 leading to the primary pressure chamber 72 and more notches 80 adjoining the aperture 78 and overlapping or fluidly communicating with the compensation port 56 to communicate the latter with the primary pressure chamber 72 via a radial clearance 82 between the large diameter portion 24 and the secondary piston 64 and a small clearance between the small diameter portion 26 and the secondary piston 64 immediately to the right of U cup seal 50.

The open end 20 of the bore carries a snap ring or stop 84 and the secondary piston 64 extends axially from the U cup seal 52 to abut the stop 84 in the rest position when braking is terminated. In order to define a rest position for the primary piston 60, the wall 70 of the secondary piston 64 is provided with a snap ring or stop 86 opposite the forward end 74. The primary piston 60 is biased into abutment with the stop 86 on the secondary piston 64 by means of a spring 88 disposed within the cavity 68 and the secondary piston 64 is biased into engagement with the stop 84 by means of a spring 90 disposed within the radial clearance 82. The spring abuts a housing shoulder 89 and a washer 91 secured to the secondary piston 64. The spring 88 includes a greater spring force when installed than spring 90.

As shown in the drawing, the primary piston 60 remains in spaced relation to the housing 18 and is also entirely disposed within the secondary piston cavity 68 in a fully telescoping manner. The spring 90 is closer to the open end 20 than the spring 88. The primary piston carries a seal 92 slidably engaging the wall 70 of cavity 68 and the secondary piston 64 carries a seal 94 slidably engaging the large diameter portion 24 of the bore.

During a brake application, the pedal 12 is actuated to impart movement to the input member 62 and the primary piston 60. The primary piston 60 moves to the left simultaneously with the secondary piston 64 to close off both compensation ports 56 and 58 and the volume of primary pressure chamber 72. Initially, the spring 90 is contracted to generate fluid pressure in chamber 66. Thereafter, the spring 88 is contracted to permit relative movement between the pistons to generate fluid pressure within the chamber 72. The notches 76 and 80 are simultaneously moved past the U cup seals 52 and 50, respectively, and out of communication with the compensation ports 58 and 56, respectively. Fluid pressure generated in the primary pressure chamber 72 is communicated through the apertures 78 to a small radial clearance between the small diameter portion 26 and the secondary piston 64 axially between the O ring seal 54 and the U cup seal 50. From the small radial clearance the fluid pressure is communicated to the outlet port 40 and to the brake circuit 14. Fluid pressure generated in the secondary pressure chamber 66 is communicated directly to the outlet port 42 and to the brake circuit 16. Upon termination of braking, the springs 88 and 90 bias the pair of pistons to return to their rest position abutting stops 84 and 86, thereby reestablishing communication between the pair of pressure chambers and the reservoir. If a delayed pressurization is desired for the pair of pressure chambers, it is possible to change the axial position of the notches 76 and 80 on the secondary piston to accommodate this delayed pressurization.

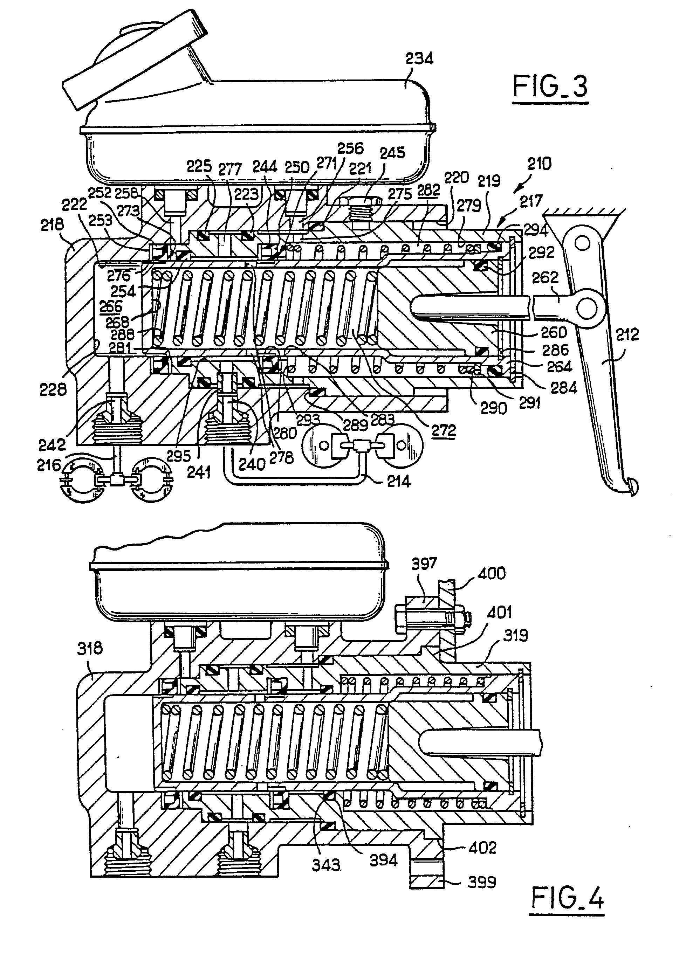

In the alternative embodiment of Figure 2 similar elements are numbered the same as in Figure 1 plus one hundred. The small diameter portion 126 is provided with an additional recess 143 for an O-ring seal 194 which takes the place of O ring seal 94 in Figure 1. Therefore, the radial clearance 182 which receives spring 190 is open to atmosphere. Also, the end of the secondary piston 164 is stamped to form a spring seat 170 and a stop 186 which abuts the primary piston 160. Both embodiments show a separate plastic reservoir; however, it is feasible to provide an integral reservoir contiguous with the housings 18 and 118.

Although the foregoing description proceeds with reference to a displacement type master cylinder, it is feasible by one skilled in the art to utilize a single piston for simultaneous compensation control in a conventional type master cylinder if the secondary piston is modified to carry a pair of U cup seals therewith.

In the other preferred embodiment of the invention illustrated by Figure 3, elements similar to those in the Figure 1 embodiment are numbered the same plus two hundreds.

The master cylinder 210 includes a housing 218 made from die-cast aluminum, magnesium or cast iron. The housing forms a stepped bore 222 leading to an opening 220 opposite from an end wall 228. A plastic reservoir 234 is attached to the housing 218 although the housing could integrally form a reservoir for the purpose of carrying brake fluid therein. The housing defines a pair of inlet ports 256 and 258 and a pair of outlet ports 240 and 242. The outlet ports 240 and 242 communicate with the brake circuits 214 and 216, respectively, while the inlet ports 256 and 258 communicate fluid for the reservoir to the stepped bore 222.

A sleeve assembly 217 is fixedly disposed within the stepped bore 222. The sleeve assembly 217 includes a first lip seal 252 facing a shoulder 253 of the stepped bore 222, a cylindrical sleeve 219, a second lip seal 250 disposed within a recess 244 on the sleeve 219, and a plurality of O ring seals 221, 223, 225 and 254. The seal 221 is disposed in abutment with a shoulder 289 on the stepped bore 222 while the seals 223, 225 and 254 are carried within recesses on the sleeve 219. An opening 275 on the sleeve 219 communicates fluid from the reservoir 234 to a bore 279 formed in the sleeve 219 and an opening 277 on the sleeve 219 communicates the bore 279 with the outlet port 240. The opening 275 is positioned on the sleeve 219 between the seals 221 and 223 and the opening 277 is positioned on the sleeve 219 between the seals 223 and 225.

A pair of pistons 260 and 264 are received within the housing stepped bore 222. The piston 260 is adapted to connect with the input member 262 and the piston 264 sealingly and slidably engages the wall of the bore 279 in the sleeve 219. The piston 264 is U shaped in cross section so as to define a cavity 268 for receiving the piston 260. The piston 260 carries a seal 292 engaging the piston 264 such that a primary pressure chamber 272 is defined within the cavity 268. The piston 264 engages the seal 252 to define a secondary pressure chamber 266 adjacent the end wall 228. The piston 264 carries a seal 294 adjacent the right end of the sleeve 219 to seal a first compensation passage generally identified at 271 and defined from opening 275 or reservoir 234 to pressure chamber 272 via a first clearance 282 between the sleeve 219 and the piston 264, a second clearance 283 adjacent recess 244, at least one notch 280 on the intermediate portion of piston 264 and at least one aperture 278 on the piston 264 leading to the pressure chamber 272. In the rest position shown in Figure 1, the pressure chamber 272 and first compensation passage 271 also communicate with the opening 277 to permit fluid communication from the reservoir 234 to the brake circuit 214. A second compensation passage generally identified at 273 extends from the reservoir 234 to the pressure chamber 266 and is defined by at least one groove 281 at the left end of sleeve 219 and at least one notch 276 at the left end of the piston 264. In an alternative, the seal 252 could be provided with protrusions forming passages with the left end of the sleeve. In the rest position the reservoir 234 is also in fluid communication with the brake circuit 216 via the pressure chamber 266.

In order to fixedly position the sleeve assembly 217 within the housing stepped bore 222, the outlet port 240 receives a fitting 241 which extends radially inwardly to fit within the opening 277. Alternatively, a stop bolt 245 could extend through the housing to engage the sleeve 219.

With the sleeve assembly 217 extending outwardly from the housing opening 220 to engage the piston 264 and carry a stop 284 in abutment with the piston 264, it is possible to provide a relatively short axial length for the housing 218. The piston 264 also extends outwardly of the housing opening 220 to engage the piston 260 and carry a stop 286 in abutment with the piston 260. Consequently, both pistons 260 and 264 are completely disposed axially within the sleeve assembly 217 at the open end 220.

A first spring 288 extends between the pistons 260 and 264 within the cavity 268 to bias the piston 260 to its rest position engaging stop 286. A second spring 290 extends between a sleeve shoulder 293 and the piston 264 via a snap washer 291 to bias the latter to its rest position engaging stop 284.

During a brake application, the piston 260 is moved to the left to compress spring 290 so that the piston 264 is also moved to the left. As the piston 264 moves, the notches 280 and 276 are moved to the left of seals 250 and 252 so that communication via the compensation passages is closed. After a predetermined contraction for spring 290, the piston 260 moves relative to the piston 264 to contract the volume of the pressure chamber 272 and contract the spring 288 to pressurize the fluid contained therein. This fluid pressure is communicated from the chamber 272 to the brake circuit 214 via the aperture 278, a third clearance 295 between the sleeve 219 and the second piston 264 intermediate seals 250 and 254, the opening 277, the fitting 241 and the outlet port 240. Similarly, the moving piston 264 contracts the volume of chamber 266 to pressurize the fluid contained therein and this fluid pressure is communicated directly to brake circuit 216 via outlet port 242. The volume of clearance 279 is also contracted during braking; however, the clearance is continuously open to the reservoir 234 via inlet port 256, so that no fluid pressure will be generated therein to oppose movement of piston 264.

In the alternative embodiment of Figure 4 similar elements are numbered the same as in Figure 3 plus one hundred. In this embodiment, the sleeve 319 is modified to include an additional recess 343 for carrying an O ring seal 394. The seal 394 is similar to the seal 294 except that it is fixed to the sleeve 319 rather than being movably carried with the piston 264. With the seal 394 in the recess 343, the right end of the piston 264 merely slidably engages the sleeve 319 without any sealing relation. In addition, the housing 318 in Figure 4 is provided with radially extending flanges 397 and 399 which are apertured to receive bolts to secure the housing to a firewall 400 or suitable mounting plate on a vehicle. The sleeve extends through the firewall and is provided with a flange 401 which is trapped between the housing and the firewall within a housing recess 402, when the housing is secured to the latter in order to fixedly dispose the sleeve assembly within the housing stepped bore.

**Claims**

1. A master cylinder comprising a housing (18; 118; 218; 318) with a bore (24; 124; 224) terminating in an open end (20; 220), a pair of pistons (60, 64; 160, 164; 260, 264) telescopically mounted within one another and coaxially and slidably disposed within said bore, said pistons cooperating with each other and with the housing to define a pair of pressure chambers (72, 66; 172, 166; 272, 266) and being movable during braking to generate fluid pressure within said pressure chambers, a pair of outlet ports (40, 42; 240, 242) formed in the housing for communicating said pressure chambers with respective brake circuits (14, 16; 214, 216), a pair of inlet or compensation ports (56, 58; 156, 158; 256, 258) formed in the housing for communicating said pressure chambers with a fluid reservoir (34; 134; 234), and passage means (80, 76; 180, 176; 280, 276) movable with said pistons and cooperating with fixed seals (50, 52; 150, 152; 250, 252) for allowing fluid communication between said compensation ports and said pressure chambers in the absence of braking and for closing said fluid communication during braking, characterized in that said passage means (80, 76; 180, 176; 280, 276) are formed on the outer one (64; 164; 264) of said pistons.

2. A master cylinder according to claim 1, wherein one (64; 164) of the pistons is sealingly received within the housing bore (24; 124) and defines with an end wall (28) of the latter one (66; 166) of the pressure chambers while the other piston (60; 160) is sealingly received within said one piston and defines therewith the other pressure chamber (72; 172), resilient means (90, 88; 190, 188) biasing said pistons toward a rest position in engagement with respective stop means (84, 86; 184, 186), characterized in that said passage means comprise two axially spaced sets of notches formed in said one piston (64; 164), namely one set of notches (76; 176) adjacent the forward end of said one piston which define a fluid path between one (58; 158) of the compensation ports and said one pressure chamber (66; 166), and another set of notches (80; 180) located at an intermediate portion of said one piston which define a fluid path between the other compensation port (56; 156) and said other pressure chamber (72; 172).

3. A master cylinder according to claim 2, characterized in that said other piston (60; 160) is fully received within said one piston (64; 164) which extends itself axially to the open end (20) of the housing bore, in that the stop means (84; 184) associated with said one piston is located at the open end of the housing bore, and in that the stop means (86; 186) associated with said other piston is carried or formed at the rearward end of said one piston.

4. A master cylinder according to claim 2 or 3, characterized in that said sets of notches (76, 80; 176, 180) cooperate with respective U cup seals (52, 50; 152, 150) which are fixedly received in recesses (48, 44; 148, 144) formed in the housing bore (24; 124).

5. A master cylinder according to claim 1, wherein one (264) of the pistons is sealingly received within a sleeve (219; 319) which itself is removably disposed within the housing bore (224) and defines with an end wall (228) of the latter one (266) of the pressure chambers while the other piston (260) is sealingly received within said one piston and defines therewith the other pressure chamber (272), resilient means (290, 288) biasing said pistons toward a rest position in engagement with respective stop means (284, 286), characterized in that said passage means comprise two axially spaced sets of notches formed in said one piston (264), namely one set of notches (276) adjacent the forward end of said one piston which define a fluid path between one (258) of the compensation ports and said one pressure chamber (266), and another set of notches (280) located at an intermediate portion of said one piston which define a fluid path between the other compensation port (256) and said other pressure chamber (272).

6. A master cylinder according to claim 5, characterized in that said other piston (260) is fully received within said one piston (264) which extends itself axially to the rearward end of the sleeve (219; 319), in that the stop means (284) associated with said one piston is located at the rearward end of the sleeve, and in that the stop means (286) associated with said other piston is carried or formed at the rearward end of said one piston.

7. A master cylinder according to claim 5 or 6, characterized in that said sets of notches (276, 280) cooperate with respective U cup seals (252, 250) which are fixedly received in recesses (248, 244) formed between the forward end of the sleeve (219; 319) and the housing (318) and within the bore of the sleeve respectively.

**Revendications**

1. Maître-cylindre comprenant un corps (18; 118; 218; 318) percé d'un alésage (24; 124; 224) terminé par une extrémité ouverte (20; 220), une paire de pistons (60, 64; 160, 164; 260, 264) disposés coaxialement et télescopiquement l'un dans l'autre ainsi que de façon coulissante dans ledit alésage, ces pistons définissant entre eux ainsi qu'avec le corps de cylindre une paire de chambres de pression (72, 66; 172, 166; 272, 266) et se déplaçant lors d'une manoeuvre de freinage pour mettre sous pression un fluide contenu dans lesdites chambres de pression, une paire d'orifices de sortie (40, 42; 240, 242) percés dans le corps de cylindre pour mettre en communication lesdites chambres de pression avec des circuits de freinage séparés (14, 16; 214, 216), une paire d'orifices d'entrée ou de compensation (56, 58; 156, 158; 256, 258) percés dans le corps de cylindre pour mettre en communication lesdites chambres de pression avec un réservoir de fluide (34; 134; 234), et des moyens formant passage de fluide (80, 76; 180, 176; 280, 276) mobiles avec lesdits pistons et coopérant avec des joints fixes (50, 52; 150, 152; 250, 252) pour établir une communication entre lesdits orifices de compensation et lesdites chambres de pression en l'absence de freinage et pour interrompre cette communication lors d'une manoeuvre de freinage, caractérisé par le fait que lesdits moyens formant passage de fluide (80, 76; 180, 176; 280, 276) sont disposés sur le seul piston extérieur (64; 164; 264).

2. Maître-cylindre selon la Revendication 1, et dans lequel le piston extérieur (64; 164) est reçu de façon étanche à l'intérieur de l'alésage (24; 124) du corps de cylindre et définit avec le fond (28) de ce dernier l'une (66; 166) des chambres de pression tandis que l'autre piston (60; 160) est reçu de façon étanche à l'intérieur dudit piston extérieur et définit avec lui l'autre chambre de pression (72; 172), des moyens élastiques (90, 88; 190, 188) rappelant lesdits pistons vers une position de repos au contact de moyens de butée respectifs (84, 86; 184, 186), caractérisé par le fait que lesdits moyens formant passage de fluide comprennent deux groupes d'encoches axialement espacés formés dans le piston extérieur (64; 164), à savoir un premier groupe d'encoches (76; 176) situées à proximité de l'extrémité antérieure du piston extérieur pour constituer un passage de fluide entre l'un (58; 158) des orifices de compensation et l'une (66; 166) des chambres de pression, et un second groupe d'encoches (80; 180) situées sur une partie intermédiaire du piston extérieur pour constituer un passage de fluide entre l'autre orifice de compensation (55; 156) et l'autre chambre de pression (72; 172).

3. Maître-cylindre selon la Revendication 2, caractérisé par le fait que ledit autre piston (60; 160) est entièrement contenu à l'intérieur du piston extérieur (64; 164) qui s'étend lui-même en direction axiale jusqu'à l'extrémité ouverte (20) de l'alésage du corps de cylindre, que les moyens de butée (84; 184) associés au piston extérieur sont disposés à l'extrémité ouverte dudit alésage, et que les moyens de butée (86; 186) associés à l'autre piston sont portés ou sont formés à l'extrémité postérieure du piston extérieur.

4. Maître-cylindre selon la Revendication 2 ou 3, caractérisé par le fait que lesdits groupes d'encoches (76, 80; 176, 180) coopèrent avec des joints d'étanchéité respectifs à section en forme de U (52, 50; 152, 150) qui sont immobilisés dans des évidements (48, 44; 148, 144) formés dans l'alésage (24; 124) du corps de cylindre.

5. Maître-cylindre selon la Revendication 1, dans lequel le piston extérieur (264) est reçu de façon étanche à l'intérieur d'un manchon (219; 319) qui est lui-même monté de façon amovible à l'intérieur de l'alésage (224) du corps de cylindre et définit avec le fond de ce dernier l'une (266) des chambres de pression tandis que l'autre piston (260) est reçu de façon étanche à l'intérieur dudit piston extérieur et définit avec lui l'autre chambre de pression (272), des moyens élastiques (290, 288) rappelant lesdits pistons vers une position de repos au contact de moyens de butée respectifs (284, 286), caractérisé par le fait que lesdits moyens formant passage de fluide comprennent deux groupes d'encoches axialement espacés formés dans le piston extérieur (264), à savoir un premier groupe d'encoches (276) situées à proximité de l'extrémité antérieure du piston extérieur pour constituer un passage de fluide entre l'un (258) des orifices de compensation et l'une (266) des chambres de pression, et un second groupe d'encoches (280) situées sur une partie intermédiaire du piston extérieur pour constituer un passage de fluide entre l'autre orifice de compensation (256) et l'autre chambre de pression (272).

6. Maître-cylindre selon la Revendication 5, caractérisé par le fait que ledit autre piston (260) est entièrement contenu à l'intérieur du piston extérieur (264) qui s'étend lui-même en direction axiale jusqu'à l'extrémité postérieure du manchon (219; 319), que les moyens de butée (284) associés au piston extérieur sont disposés à l'extrémité postérieure dudit manchon, et que les moyens de butée (286) associés à l'autre piston sont portés ou sont formés à l'extrémité postérieure du piston extérieur.

7. Maître-cylindre selon la Revendication 5 ou 6, caractérisé par le fait que lesdits groupes d'encoches (276, 280) coopèrent avec des joints d'étanchéité respectifs à section en forme de U (252, 250) qui sont immobilisés dans des évidements (248, 244) formés respectivement entre l'extrémité antérieure du manchon (219; 319) et le corps de cylindre (318), et dans l'alésage du manchon.

**Patentansprüche**

1. Hauptzylinder mit einem Gehäuse (18; 118; 218; 318) mit einer Bohrung (24; 124; 224), die in einem offenen Ende (20; 220) endet, einem Paar von Kolben (60, 64; 160, 164; 260, 264), die teleskopartig einer in dem anderen montiert und koaxial und gleitend in der Bohrung angeordnet sind, wobei die Kolben miteinander und mit dem Gehäuse zusammenwirken und ein Paar von Druckkammern (72, 66; 172, 166; 272, 266) bilden sowie während des Bremsens zur Erzeugung eines Strömungsmitteldruckes innerhalb der Druckkammern bewegbar sind, einem Paar von Auslaßöffnungen (40, 42; 240, 242), die im Gehäuse ausgebildet sind und die Druckkammern mit entsprechenden Bremskreisen (14, 16; 214, 216) verbinden, einem Paar von Einlaß- oder Kompensationsöffnungen (56, 58; 156, 158; 256, 258), die im Gehäuse ausgebildet sind und die Druckkammern mit einem Strömungsmittelspeicher (34; 134; 234) verbinden, und Kanälen (80, 76; 180, 176; 280, 276), die mit den Kolben bewegbar sind und mit festen Dichtungen (50, 52; 150, 152; 250, 252) zusammenwirken, um eine Strömungsmittelverbindung zwischen den Kompensationsöffnungen und den Druckkammern herzustellen, wenn kein Bremsvorgang stattfindet, und um während eines Bremsvorganges diese Strömungsmittelverbindung zu verschließen, dadurch gekennzeichnet, daß die Kanäle (80, 76; 180, 176; 280, 276) auf dem äußeren Kolben (64; 164; 264) ausgebildet sind.

2. Hauptzylinder nach Anspruch 1, bei dem einer (64; 164) der Kolben in abgedichteter Weise in der Gehäusebohrung (24; 124) angeordnet ist und mit einer Endwand (28) derselben eine (66; 166) der Druckkammern bildet, während der andere Kolben (60; 160) in abgedichteter Weise in dem einen Kolben angeordnet ist und mit diesem die andere Druckkammer (72; 172) bildet, und bei dem elastische Einrichtungen (90, 88; 190, 188) die Kolben in Richtung auf eine Ruhelage unter Vorspannung setzen, in der sie mit entsprechenden Anschlageinrichtungen (84, 86; 184, 186) in Eingriff stehen, dadurch gekennzeichnet, daß die' Kanäle zwei axial voneinander beabstandete Sätze von Einkerbungen aufweisen, die in dem einen Kolben (64; 164) ausgebildet sind, nämlich einen Satz von Einkerbungen (76; 176) benachbart zum vorderen Ende des einen Kolbens, die eine Strömungsmittelbahn zwischen einer (58; 158) der Kompensationsöffnungen und der einen Druckkammer (66; 166) bilden, und einen anderen Satz von Einkerbungen (80; 180), die an einem mittleren Abschnitt des einen Kolbens angeordnet sind und eine Strömungsmittelbahn zwischen der anderen Kompensationsöffnung (56; 156) und der anderen Druckkammer (72; 172) bilden.

3. Hauptzylinder nach Anspruch 2, dadurch gekennzeichnet, daß der andere Kolben (60; 160) vollständig in dem einen Kolben (64; 164) aufgenommen ist, der sich wiederum selbst axial bis zum offenen Ende (20) der Gehäusebohrung erstreckt, daß die dem einen Kolben zugeordnete Anschlageinrichtung (84; 184) am offenen Ende der Gehäusebohrung angeordnet ist und daß die dem anderen Kolben zugeordnete Anschlageinrichtung (86; 186) vom rückwärtigen Ende des einen Kolbens getragen wird oder an diesem ausgebildet ist.

4. Hauptzylinder nach Anspruch 2 oder 3, dadurch gekennzeichnet, daß die Sätze der Einkerbungen (76, 80; 176, 180) mit entsprechenden becherförmigen und U-förmigen Dichtungen (52, 50; 152, 150) zusammenwirken, die fest in Ausnehmungen (48, 44; 148, 144) angeordnet sind, welche in der Gehäusebohrung (24; 124) ausgebildet sind.

5. Hauptzylinder nach Anspruch 1, bei dem einer (264) der Kolben in abgedichteter Weise in einer Hülse (219; 319) angeordnet ist, die selbst lösbar in der Gehäusebohrung (224) angeordnet ist und mit einer Endwand (228) derselben eine (266) der Druckkammern bildet, während der andere Kolben (260) in abgedichteter Weise in dem einen Kolben angeordnet ist und mit diesem die andere Druckkammer (272) bildet, und bei dem elastische Einrichtungen (290, 288) die Kolben in Richtung auf eine Ruhelage in Eingriff mit entsprechenden Anschlageinrichtungen (284, 286) unter Vorspannung setzen, dadurch gekennzeichnet, daß die Kanäle zwei axial voneinander beabstandete Sätze von Einkerbungen umfassen, die in dem einen Kolben (264) ausgebildet sind, nämlich einen Satz von Einkerbungen (276) benachbart zum vorderen Ende des einen Kolbens, die eine Strömungsmittelbahn zwischen einer (258) der Kompensationsöffnungen und der einen Druckkammer (266) bilden, und einen anderen Satz von Einkerbungen (280), die an einem Zwischenabschnitt des einen Kolbens angeordnet sind und eine Strömungsmittelbahn zwischen der anderen Kompensationsöffnung (256) und der anderen Druckkammer (272) bilden.

6. Hauptzylinder nach Anspruch 5, dadurch gekennzeichnet, daß der andere Kolben (260) vollständig in dem einen Kolben (264) angeordnet ist, welcher sich selbst axial bis zum hinteren Ende der Hülse (219; 319) erstreckt, daß die dem einen Kolben zugeordnete Anschlageinrichtung (284) am hinteren Ende der Hülse angeordnet ist und daß die dem anderen Kolben zugeordnete Anschlageinrichtung (286) vom hinteren Ende des einen Kolbens getragen wird oder an diesem ausgebildet ist.

7. Hauptzylinder nach Anspruch 5 oder 6, dadurch gekennzeichnet, daß die Sätze von Einkerbungen (276, 280) mit entsprechenden U-förmigen und becherförmigen Dichtungen (252, 250) zusammenwirken, die fest in Ausnehmungen (248, 244) angeordnet sind, wleche zwischen dem vorderen Ende der Hülse (219; 319) und dem Gehäuse (318) sowie innerhalb der Bohrung der Hülse ausgebildet sind.

Fig. 1

Fig. 2

1

FIG_3

FIG_4